# EUROPEAN PATENT SPECIFICATION

(11) **EP 4 376 353 B1**
(45) Date of publication and mention of the grant of the patent: **06.05.2026**
(21) Application number: 21950602.9
(22) Date of filing: 26.07.2021
(51) Int. Cl.: H04L 9/32, H04L 9/00

(54) **INFORMATION TRANSMISSION METHOD, SYSTEM AND APPARATUS BASED ON BLOCKCHAIN, AND STORAGE MEDIUM**
INFORMATIONSÜBERTRAGUNGSVERFAHREN, -SYSTEM UND -VORRICHTUNG AUF BASIS EINER BLOCKCHAIN UND SPEICHERMEDIUM
PROCÉDÉ, SYSTÈME ET APPAREIL DE TRANSMISSION D'INFORMATIONS BASÉS SUR UNE CHAÎNE DE BLOCS ET SUPPORT DE STOCKAGE

(30) Priority: 21.07.2021 CN 202110824381
(43) Date of publication of application: 29.05.2024
(73) Proprietor: Shenzhen Xin-An Digital Technology Co., Ltd., Shenzhen City, Guangdong 518057 (CN)
(72) Inventor: ZHOU, Caiting, Shenzhen City, Guangdong 518057 (CN); ZHANG, Dandong, Shenzhen City, Guangdong 518057 (CN); QIN, Yejun, Shenzhen City, Guangdong 518057 (CN); TIAN, Baoqiang, Shenzhen City, Guangdong 518057 (CN); WANG, Liyan, Shenzhen City, Guangdong 518057 (CN)
(74) Representative: Vitina, Maruta
(86) International application number: PCT/CN2021/108404
(87) International publication number: WO 2023/000353

(56) References cited:
- CN-A- 108 009 824
- CN-A- 109 831 413
- CN-A- 109 831 413
- CN-A- 110 069 345
- CN-A- 110 648 134
- US-A1- 2019 334 920
- US-A1- 2020 349 261
- US-A1- 2020 396 065

## Description

### TECHNICAL FIELD

This application relates to information transmission, and more specifically to an information transmission method, system and device based on blockchain, and a computer-readable storage medium.

### BACKGROUND

This part is intended to provide background for the embodiments of the present disclosure, and should not be considered to acknowledge that the descriptions therein completely belong to the prior art recognized as prior art.

Blockchain is a chained data structure formed by combining blocks of data in a chronological order, and is a distributed ledger that can guarantee the immutability and unforgeability of data in encrypted form.

With the increasing popularization of digital technology, daily lives, operations, and business processes of individuals and organizations are all done in the digital world (cloud service environment), where the internal communication is more efficient and flexible, and inter-team collaboration is easier. However, while individuals and organizations are fully enjoying the convenience of digitalization, the security of information interaction between individuals, organizations and between individuals and organizations, is also facing greater potential threats and challenges.

Currently, information interactions between individuals, within the enterprise, and between enterprises rely on online services provided by single-subject products, and the content of the information interactions involves personal privacy, commercial secrets, and even commercial assets. In other words, personal data and privacy security, enterprise information security, digital asset security, and intellectual property security are highly dependent on third parties under the existing service system. Therefore, there is a huge risk of information leakage and "single point of failure", which poses a great risk and challenge to the protection of personal privacy, daily operation of enterprises, and the security of commercial secrets and key digital assets. Document US2020/349261 is directed to document sharing system having second blockchain client coupled to first blockchain client, and transferring first key to first blockchain client using private channel and generating transaction to acknowledge receipt of encrypted document.

### SUMMARY

An objective of the present disclosure is to provide an information transmission method, system and device, and a storage medium based on blockchain technologies to solve the above technical problems.

To solve the above technical problems, the following technical solutions are adopted.

The invention is provided as defined in the independent claims. Some preferred embodiments are described in the dependent claims.

In a first aspect, this application provides an information transmission method based on blockchain technology, comprising:
creating, by a sender, a transmission contract on a blockchain; submitting a digest of to-be-transmitted information to the transmission contract; and sending a ciphertext of the to-be-transmitted information, an address of a receiver and an address of the transmission contract to a first transmission node of a transmission network, wherein the sender is registered at the first transmission node of the transmission network;
sending, by the first transmission node, the ciphertext of the to-be-transmitted information, the address of the receiver and the address of the transmission contract to a second transmission node of the transmission network in a point-to-point manner, wherein the receiver is registered at the second transmission node of the transmission network; and
receiving, by the second transmission node, the ciphertext of the to-be-transmitted information and the address of the transmission contract; sending, by the second transmission node, the ciphertext of the to-be-transmitted information and the address of the transmission contract to the receiver; and generating a receipt acknowledgement confirming that the ciphertext of the to-be-transmitted information and the address of the transmission contract have been received, and submitting the acknowledgement receipt to the transmission contract.

In some embodiments, when or after the first transmission node sends the ciphertext of the to-be-transmitted information, the address of the receiver and the address of the transmission contract to the second transmission node in a point-to-point manner, the information transmission method further comprises:
generating a sending acknowledgement confirming that the ciphertext of the to-be-transmitted information, the address of the receiver and the address of the transmission contract have been sent, and submitting the sending acknowledgement to the transmission contract.

In some embodiments, the first transmission node and the second transmission node are the same transmission node, or are different transmission nodes.

In some embodiments, the transmission contract further comprises a predetermined token distribution rule and tokens submitted by the sender and/or the receiver, and is configured to distribute the tokens to one or more of the first transmission node, the second transmission node and the receiver based on the predetermined token distribution rule and data submitted to the transmission contract.

In some embodiments, the sender is provided with a sender public key and a sender private key obtained based on an asymmetric encryption algorithm; and an address of the sender is identified by using the sender public key or a digest thereof;
the receiver is provided with a receiver public key and a receiver private key obtained based on the asymmetric encryption algorithm; and the address of the receiver is identified by using the receiver public key or a digest thereof; and
the transmission network comprises at least two transmission nodes comprising the first transmission node and the second transmission node, wherein each of the at least two transmission nodes has a public key and a private key obtained based on the asymmetric encryption algorithm; and a node address of each of the at least two transmission nodes is identified by using the public key or a digest thereof;
wherein the address of the sender, the address of receiver and the address of each of the at least two transmission nodes are publicly available on the blockchain.

In some embodiments, the information transmission method further comprises:
registering a root domain name on the blockchain using the public key of each of the at least two transmission nodes;
registering a sender domain name based on the root domain name of the first transmission node using the sender public key of the sender;
registering a receiver domain name based on the root domain name of the second transmission node using the receiver public key of the receiver; and
making the root domain name, the sender domain name and the receiver domain name of each of the at least two transmission nodes publicly available on the blockchain.

In some embodiments, the information transmission method further comprises:
generating, by the sender, the ciphertext of the to-be-transmitted information through steps of:
   encrypting, by the sender, the to-be-transmitted information using the receiver public key; and signing the to-be-transmitted information using the sender private key to generate the ciphertext of the to-be-transmitted information; and
decrypting, by the receiver, the ciphertext of the to-be-transmitted information through steps of:
   verifying, by the receiver, a signature of the ciphertext using the sender public key; and decrypting the ciphertext using the receiver private key.

In some embodiments, the information transmission method further comprises:
signing and confirming, by the first transmission node, the ciphertext of the to-be-transmitted information using the private key of the first transmission node to generate the sending acknowledgement when sending the ciphertext of the to-be-transmitted information; and uploading the sending acknowledgement to the blockchain; and/or
signing and confirming, by the second transmission node, the ciphertext of the to-be-transmitted information using the private key of the second transmission node to generate the receipt acknowledgement when receiving the ciphertext of the to-be-transmitted information; and uploading the receipt acknowledgement to the blockchain.

In some embodiments, the information transmission method further comprises:
signing and confirming, by the second transmission node, the ciphertext of the to-be-transmitted information using the private key of the second transmission node to generate a delivery confirmation acknowledgement when delivering the ciphertext of the to-be-transmitted information to the receiver; and uploading the delivery confirmation acknowledgement to the blockchain.

In some embodiments, the information transmission method further comprises:
checking, by first transmission node, whether the transmission contract contains a predetermined number of tokens before sending the to-be-transmitted information to the second transmission node in a point-to-point manner, and if not, refusing to send the to-be-transmitted information.

In some embodiments, a sequence of information sent by the first transmission node is the same as a sequence of information received by the second transmission node.

In some embodiments, the transmission contract further comprises a token charge rule; and the token charge rule is negotiated by one or more of the sender, the receiver, the first transmission node and the second transmission node; and
the token charge rule comprises any one of the following rules: (1) payment of tokens by the sender; (2) precommitment or pledge of a predetermined number of tokens by the receiver to the second transmission node; and (3) shared payment of tokens by the sender and the receiver.

In some embodiments, the predetermined token distribution rule comprises any one of the following rules:
(1) after the sending acknowledgement is submitted by the first transmission node to the transmission contract, and the receipt acknowledgement is submitted by the second transmission node to the transmission contract, proportionally distributing the tokens to the first transmission node and the second transmission node; and
(2) only after the second transmission node submits the receipt acknowledgement back to the transmission contract, distributing the tokens to the first transmission node and/or the second transmission node according to the predetermined token distribution rule in the transmission contract.

In some embodiments, when a dispute arises between the sender and the receiver, the information transmission method further comprises:
submitting, by the sender and/or the receiver, the to-be-transmitted information or transmitted information to an arbitration party; and
performing, by the arbitration party, automatic tracing and cross-examination, based on the to-be-transmitted information or the transmitted information, the sender public key, the receiver public key, the public key of the first transmission node, and the public key of the second transmission node, and data submitted to the transmission contract.

In some embodiments, the transmission network comprises an auditing protocol; and the information transmission method further comprises:
auditing transmission behavior of each of the at least two transmission nodes based on the auditing protocol using on-chain data and data of the transmission contract; and
if evidence is found that a transmission node does not perform transmission according to a predetermined sending and receiving protocol, removing the transmission node from the transmission network or punishing the transmission node.

In some embodiments, the transmission network is a virtual network, and each of the first transmission node and the second transmission node is a virtual node.

In some embodiments, the transmission network is configured to realize point-to-point transmission through wireless communication, optical communication, satellite communication, or internet communication.

In some embodiments, the information transmission method further comprises:
managing transmission nodes in the transmission network by using one or more of the following rules:
removing a transmission node that does not meet service requirements from the transmission network;
punishing a transmission node with misbehavior;
permitting a ordinary node that satisfies candidate conditions to be a candidate node in the transmission network; and
permitting a candidate node that satisfies election conditions to be a transmission node in the transmission network.

In some embodiments, the step of removing a transmission node that does not meet service requirements from the transmission network further comprises:
when any one or more of the transmission nodes of the transmission network are detected to fail to perform an information transmission action as required within a specified time period, removing the any one or more transmission nodes from the transmission network.

In some embodiments, step the step of punishing a transmission node with misbehavior comprises:
after detecting the presence of a transmission node having a predetermined misbehavior, which is defined as a misbehavior node, submitting, by an auditing party of the transmission network, a punishment resolution against the misbehavior node on the blockchain; and automatically executing relevant punishment measures by the transmission nodes according to the punishment resolution; and/or
submitting, by at least one of the sender, the receiver and the transmission node, evidence against the misbehavior of the misbehavior node on the blockchain; and executing, by the transmission nodes, punishment against the misbehavior node in accordance with the evidence and an auditing protocol.

In some embodiments, the step of permitting an ordinary node that satisfies candidate conditions to be a candidate node in the transmission network further comprises:
deploying a node campaign contract on the blockchain; and allowing an ordinary node that pledges a predetermined number of tokens on the node campaign contract to become the candidate node in the transmission network.

In some embodiments, the step of permitting a candidate node that satisfies election conditions to be a transmission node in the transmission network further comprises:
allowing the candidate node satisfying one or more of the following campaign conditions to become the transmission node of the transmission network:
(1) a transmission/connection rate with a related transmission node satisfies a first predetermined condition, wherein the related transmission node is a transmission node in the transmission network that has a transmission relationship with a to-be-replaced node;
(2) a multi-path concurrent transmission rate with the related transmission node satisfies a second predetermined condition;
(3) the number of tokens pledged to the node campaign contract within an open time window satisfies a third predetermined condition;
(4) the number of votes obtained from a governance board of the transmission network satisfies a fourth predetermined condition; and
(5) a payment rate of a predetermined number of tokens to the node campaign contract within the open time window satisfies a fifth predetermined condition.

In a second aspect, this application provides an information transmission system, being configured to implement the aforementioned information transmission method, comprising:
a sender;
a receiver;
a transmission network; and
a blockchain;
wherein the sender is configured to create a transmission contract on the blockchain, submit a digest of to-be-transmitted information to the transmission contract, and send a ciphertext of the to-be-transmitted information, an address of the receiver and an address of the transmission contract to a first transmission node of the transmission network, wherein the sender is configured to be registered at the first transmission node of the transmission network;
the first transmission node is configured to send the ciphertext of the to-be-transmitted information, the address of the receiver and the address of the transmission to a second transmission node of the transmission network in a point to point manner, wherein the receiver is configured to be registered at the second transmission node of the transmission network; and
the second transmission node is configured to receive the ciphertext of the to-be-transmitted information and the address of the transmission contract, and send the ciphertext of the to-be-transmitted information and the address of the transmission contract to the receiver, and generate and submit a receipt acknowledgement to the transmission contract.

In a third aspect, this application provides an information transmission device based on blockchain technology, comprising:
at least one processor; and
a memory in communication connection to the at least one processor;
wherein the memory is configured to store an instruction executable by the at least one processor, and the instruction is configured to be executed by the at least one processor to perform the aforementioned information transmission method.

In a third aspect, this application provides a computer-readable storage medium, wherein the computer-readable storage medium is configured to store a program, and the program is configured to be executed by a multi-core processor to perform the aforementioned information transmission method.

The present application has at least the following beneficial effects. The embodiments of this disclosure constructs a secure information transmission method that combines the advantages of blockchain (such as traceability, immutability, and high-strength trustworthy consensus) and the advantages of transmission performance of the transmission network. Among them, a highly reliable point-to-point transmission network is used to achieve high-efficiency information transfer and secure and effective flow of sensitive data and key digital assets, and avoid the shortcomings of the blockchain network in high-throughput and high-capacity data services. The blockchain is utilized as a trusted bulletin board and depository database for the transmission network to record key status data (such as sending conformation acknowledgement, receipt conformation acknowledgement), so as to track the information transmission chain with a view to improving the accessibility and security of information.

It should be understood that the above description is only an overview of the technical solutions of the present disclosure, so that the technical means of the present disclosure can be more clearly understood and thus can be implemented in accordance with the specification. To make the above and other objects, features and advantages of the present disclosure more apparent and understandable, the following specific embodiments of the present invention are hereinafter described by way of example.

### BRIEF DESCRIPTION OF THE DRAWINGS

By reading the detailed description of the exemplary embodiments below, one of ordinary skill in the art will understand the advantages and benefits of the present disclosure. The accompanying drawings are merely for the purpose of illustrating exemplary embodiments and are not to be considered a limitation of the present disclosure. Moreover, throughout the accompanying drawings, the same symbols are used to denote the same components.
Fig. 1 is a schematic diagram of a structure of an information transmission system based on blockchain technology according to an embodiment of the present disclosure;
Fig. 2 a flow chart of an information transmission method based on blockchain technology according to an embodiment of the present disclosure;
Fig. 3 a flow chart of an information transmission method based on blockchain technology according to an embodiment of the present disclosure; and
Fig. 4 a schematic diagram of an information transmission device based on blockchain technology according to an embodiment of the present disclosure.

### DETAILED DESCRIPTION OF EMBODIMENTS

Exemplary embodiments of the present disclosure will be described in detail below with reference to the accompanying drawings. Although exemplary embodiments of the present disclosure are shown in the accompanying drawings, it should be understood, however, that the present disclosure can be implemented in various forms without being limited by the embodiments set forth herein. Rather, these embodiments are provided to enable a more thorough understanding of the present disclosure and to completely convey the scope of the present disclosure to one of ordinary skilled in the art.

In the description of embodiments of the present application, it should be understood that terms such as "comprising" or "having" are intended to indicate the presence of the features, figures, steps, acts, components, parts, or combinations thereof disclosed herein, and are not intended to exclude one or more other features, figures, steps, acts, components, parts, or combinations thereof.

Unless otherwise indicated, "/" means or. For example, A/B may refer to either A or B. "and/or" used herein is merely an associative relationship describing an associated object, denoting that three relationships may exist. For example, "A and/or B" may mean A alone, A and B at the same time, and B alone.

The terms, i.e., "first" and "second", are merely used for descriptive purposes and are not to be understood as indicating or implying relative importance or implicitly specifying the number of technical features indicated. Thus, a feature defined with "first" or "second" may expressly or implicitly include one or more such features. In the description of the embodiments of the present application, unless otherwise specified, "more than one" means two or more.

All of the code in this application is exemplary, and variations can be thought by those skilled in the art based on factors such as the programming language used, specific needs, and personal habits, without departing from the ideas of this application.

It is also noted that the embodiments and the features in the embodiments in the present disclosure may be combined with each other without conflict. The present disclosure will be described in detail below with reference to the accompanying drawings and the embodiments.

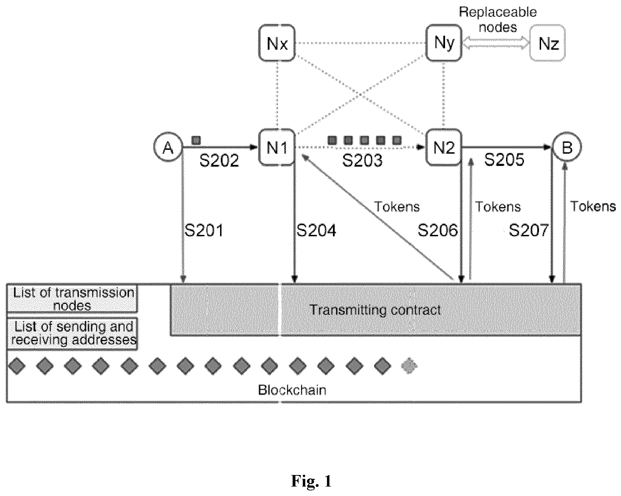

Fig. 1 shows an information transmission system based on blockchain technology provided in an embodiment of the present application. The system mainly includes a transmission network for efficient information transmission, and a blockchain for recording and depositing key state information for information transmission. A smart contract on the blockchain can also be used for managing expenses.

The aforementioned transmission network is specifically a point-to-point transmission network, consisting of transmission nodes (N₁, N₂, ..., Nₓ, and N_{y}) responsible for information receiving and transmission, and information routing and distribution in the transmission network. A network connection is established between any of the transmission nodes that allows direct and efficient communication. Based on this, a sender A is registered at a first transmission node N₁ of the transmission network, and the first transmission node N₁ may also be referred to as a sender transmission node. The receiver B is registered at a second transmission node N₂ of the transmission network, and the second transmission node N₂ may also be referred to as a receiver transmission node. Thereby, the information transmission from the sender to the receiver can be realized through the transmission network.

The information stored in the aforementioned blockchain has the characteristics of "non-falsification", "full traceability", "traceability", "transparency" and "collective maintenance". The blockchain contains a list of transmission nodes and a list of sender and receiver addresses. The list of transmission nodes is used to record and publicize the address of each transmission node in the transmission network, and the list of sender and receiver addresses is used to record and publicize the address of the sender and receiver.

Various embodiments of the present application are illustrated by example of the information transmission method based on blockchain technology applied to the information transmission system based on blockchain technology of Fig. 1.

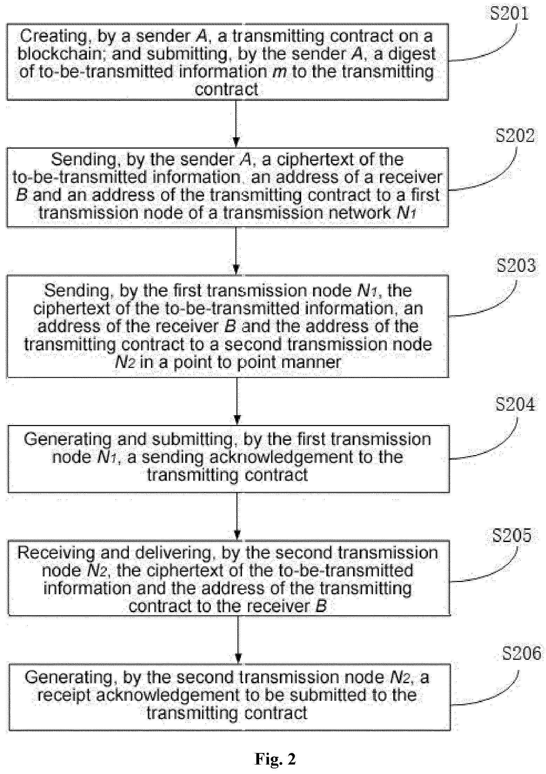

Fig. 2 shows a flow chart of the information transmission method based on blockchain technology according to an embodiment of the present application, in which, from the perspective of a device, the executing subject may be one or more electronic devices; and from the perspective of a programme, the executing subject may accordingly be a programme loaded on these electronic devices.

As shown in Fig. 2, an information transmission method based on blockchain technology is illustrated, which includes the following steps.

(S201) A sender *A* creates an transmission contract on a blockchain and submits a digest of to-be-transmitted information *m* to the transmission contract. The transmission contract is an on-chain smart contract that defines a set of digitized protocols with specific rules, and the protocols are capable of being enforced on the chain when certain conditions are met. The digest is obtained by hashing the to-be-transmitted information *m*.

(S202) The sender *A* sends the ciphertext of the to-be-transmitted information, an address of a receiver *B* and an address of the transmission contract to a first transmission node of a transmission network *N₁.* The to-be-transmitted information specifically refers to information that can be sent and received by various means of information transmission, and includes, but is not limited to, text, pictures, audio, video, and documents.

(S203) The first transmission node *N₁* sends the ciphertext of the to-be-transmitted information, an address of the receiver *B* and an address of the transmission contract to a second transmission node *N₂* in a point-to-point manner.

Optionally, at or after step (S203), step S204, i.e., the first transmission node *N₁* generates and submits a sending acknowledgement to the transmission contract, may also be performed.

(S205) The second transmission node *N₂* receives and delivers the ciphertext of the to-be-transmitted information and the address of the transmission contract to the receiver *B.*

(S206) The second transmission node *N₂* generates and submits a receipt acknowledgement to the transmission contract.

It is to be understood that to reliably obtain the status information of the transmission node execution, it is necessary to upload the receipt acknowledgement at least by the second transmission node *N₂,* and optionally it may be possible to upload the sending acknowledgement by the first transmission node *N₁.*

In summary, the present disclosure constructs a secure information transmission method that combines the advantages of traceability, tamperability and high-strength trusted consensus of the blockchain , and the advantages of transmission performance of the transmission network. Among them, a highly reliable point-to-point transmission network is utilized to achieve high efficiency information transfer, thereby achieving safe and effective flow of sensitive data and key digital assets and avoiding the shortcomings of the blockchain network in high-throughput and high-capacity data services. The blockchain is utilized as a trusted bulletin board and depository database for the transmission network, which can be in the form of a public chain, a federated chain, a private chain, or a mixture of many different forms of chains, to record key status data (such as receipt conformation acknowledgement), so as to track the information transmission chain with a view to improving the accessibility and security of the information.

In the above embodiments, the first transmission node *N₁* and the second transmission node *N₂* are different transmission nodes. It should be understood, however, that in other embodiments, the first transmission node *N₁* and the second transmission node *N₂* may also be the same transmission node. In other words, the sender A and the receiver B may be registered at the same transmission node. In this case, at least a receipt acknowledgement may be generated by the transmission node and uploaded to the transmission contract of the blockchain.

In some embodiment, the transmission contract includes a token distribution rule and tokens from the sender and/or receiver that are paid by the sender and/or receiver for the information transmission. For example, the tokens may be obtained through public trading, over-the-counter (OTC) trading, and direct participation in consensus work of the blockchain. Moreover, the tokens may be distributed to one or more of the first transmission node, the second transmission node and the receiver according to the token distribution rule, which is intended to provide incentives for transmission nodes that send, receive and transmit information in accordance with a secure communication protocol.

In some embodiments, public and private keys of the sender *A,* the receiver *B,* and the individual transmission nodes (*N₁, N₂, ..., Nₓ, N_{y}*) of the transmission network may be pre-set, where pairs of public and private keys may be obtained based on asymmetric cryptographic algorithms. The public keys are publicly available on the blockchain, and the private keys are kept by the sender *A,* the receiver *B,* and the individual transmission nodes (*N₁, N₂, ..., Nₓ, N_{y}*). Specifically, the sender *A* has a sender public key and a sender private key obtained based on an asymmetric encryption algorithm, where the sender public key is used to identify an address of the sender. The receiver B has a receiver public key and a receiver private key obtained based on the asymmetric encryption algorithm, where the receiver public key is used to identify an address of the receiver. The transmission network includes at least two transmission nodes, where each transmission node has a public key and a private key each obtained based on the asymmetric encryption algorithm, where the public key is used to identify a node address of the transmission node. The addresses of the sender, the address of the receiver, and the address of each of the transmission nodes are disclosed on the blockchain.

In some embodiments, before step (S201), the information transmission method may also include the following steps. A root domain name is registered on the blockchain using the public key of each transmission node. A sender domain name is registered based on the root domain name of the first transmission node of the transmission network using the sender public key of the sender. A receiver domain name is registered based on the root domain name of the second transmission node of the transmission network using the receiver public key of the receiver. The root domain name, the sender domain name and the receiver domain name of each transmission node are publicly available on the blockchain.

In other words, each transmission node registers a root domain name on the blockchain, and the sender and the receiver register sub-domain names based on the root domain name of the transmission node or on other sub-domain names. Each sub-domain registration requires authorization from the registrant of the domain name at the previous level. For example, the domain name rules for the addresses of the sender and the receiver may be similar to the existing Internet domain name rules. To facilitate the recording and dissemination of the sending and receiving addresses, the domain name services related to the transmission nodes and the blockchain are responsible for providing resolution services from domain name to address. The difference with Internet domain names is that the sender and receiver only need to use public keys when registering domain names for the virtual transmission network. The sending and receiving domain names are in the form of "mao.xa", "xhs.xinan", "boc.mars", Wen Tianxiang. xinan, contemporary xinqiji. dsrn, "shakespear.xinan", etc. A domain name corresponds to one or a series of sending and receiving addresses. Among them, ".xa", ".xinan" and ".mars" are the root domain names belonging to the transmission nodes, "mao.xa" is a sub-domain name that can be registered by the sender and the receiver, and "bit.mao.xa" is a sub-domain name or third-level domain name that can be registered based on the sender and the receiver, and so on.

In some embodiments, before step (S202), the information transmission method may also include the generation of the ciphertext of the to-be-transmitted information by the sender. Specifically, the sender encrypts the to-be-transmitted information using the receiver public key, and signs the to-be-transmitted information using the sender private key to generate the ciphertext of the to-be-transmitted information. Based on this, after step (S205), the information transmission method may also include the decryption on the received ciphertext of the to-be-transmitted information. Specifically, the receiver B decrypts the received ciphertext of the to-be-transmitted information using the receiver private key, and verifies a signature of the ciphertext using the sender public key. In this embodiment, by adopting the above signature-encryption mechanism, the data security of the sender and the receiver is ensured at the same time.

In some embodiments, before step (S203), the first transmission node *N₁* may also check the tokens in the transmission contract to safeguard the interests of the transmission node. Specifically, before sending the to-be-transmitted information to the second transmission node in a point-to-point manner, the first transmission node checks whether the transmission contract contains a predetermined number of tokens, and if yes, the first transmission node sends the to-be-transmitted information to the second transmission node; and if not, the first transmission node refuses to send the to-be-transmitted information.

In some embodiments, step (S204) specifically includes: when sending the to-be-transmitted information, the first transmission node signs and confirms the to-be-transmitted information using its own private key to generate a sending acknowledgement, and submits the sending acknowledgement to the blockchain.

Optionally, the first transmission node N₁ signs the to-be-transmitted information using its own private key and uploads the signed digest as the sending acknowledgement to the blockchain.

In some embodiments, step (S206) may include: when receiving the to-be-transmitted information, the second transmission node signs and confirms the to-be-transmitted information using its own private key to generate the receipt acknowledgement, and submits the receipt acknowledgement to the blockchain.

Optionally, the second transmission node signs the to-be-transmitted information using its own private key and uploads the signed digest as the receipt acknowledgement to the blockchain.

In some embodiments, step (S206) may further include: when delivering the to-be-transmitted information to the receiver *B,* the second transmission node signs and confirms the to-be-transmitted information using the its own private key to generate a delivery confirmation acknowledgement, and submits the delivery confirmation acknowledgement to the blockchain.

Optionally, the second transmission node signs the to-be-transmitted information using its own private key and uploads the signed digest as the delivery confirmation acknowledgement to the blockchain.

In some embodiments, referring to Fig. 1, after step (S206), and after the receiver *B* reads the ciphertext of the to-be-transmitted information, step (S207) may be performed, that is, the receiver private key is used to sign and confirm the read to-be-transmitted information to generate a read confirmation acknowledgement, and the read confirmation acknowledgement is uploaded to the transmission contract of the blockchain.

In other words, when transmitting and receiving each information, the transmitting node in the transmission network needs to use its private key to sign and confirm the sending and receiving actions of the information, and record the signature on the blockchain as the acknowledgement of the information sending and receiving. All of the above acknowledgements contain the timestamp information at the time of signing. As a result, the blockchain records the state information of the to-be-transmitted information during a whole transmission process from the sender to each transmission node in the transmission network to the receiver.

In some embodiments, to ensure undifferentiated sending and receiving of the information by the transmission nodes and to avoid the malicious rejection and filtering of the information from a specific address, it may also be agreed that a sequence of the information sent by the first transmission node is the same as a sequence of the information received by the second transmission node.

For example, when the information is sequentially numbered according to the order of sending (T₁, T₂, ...Tₙ; T₁ < T₂ < ... < Tₙ), the transmission node of the sender is required to sign and confirm the T₁, T₂, ... Tₙ messages sequentially when it sends these messages. At the transmission node of the receiver, it also required to sign the messages in the above order. In addition, the transmission node of the receiver must sign and confirm the received messages (i.e., it must issue a receipt conformation acknowledgement). In short, the transmission nodes can coordinate the order of sending and receiving the information to ensure that the order of sending and receiving information is the same at each transmission node.

The transmission contract in this embodiment provides for a token charge rule and a token distribution rule. The token charge rule refers to a rule for the sender and/or the receiver to pay tokens to the transmission contract deployed in the blockchain, and the token distribution rule refers to a rule for the transmission nodes and the receiver performing the message transmission task to obtain token rewards.

The token charge rule and the token distribution rule are described in detail below with reference to specific implementations.

In some embodiments, the token charge rule may be negotiated by one or more of the sender, the receiver, the first transmission node and the second transmission node. The token charge rule includes any one or more of the following rules: (1) payment of tokens by the sender; (2) precommitment or pledge of a predetermined number of tokens by the receiver to the second transmission node; and (3) shared payment of tokens by the sender and the receiver.

For example, the cost for information transmission to be paid by the sender may be determined by a negotiated vote of the transmitting nodes, or may be determined by the receiver or the sender of the information. At least the following three charge mechanisms are included. (1) The sender pays the fee. For example, the sender pays tokens to the receiver when the sender and receiver communicate for the first time, and after the receiver receives a certain information from the sender for the first time, the receiver decides whether or not to continue to charge the cost of communication in the subsequent communication. In this case, to ensure the revenue of the transmission node, the receiver node needs to deduct a certain percentage of service fees from the tokens paid by the sender, and the transmitter node of the sender can choose whether or not to charge service fees. (2) The receiver pays the fee. For example, if the receiver is the information collector, the receiver is more willing to pay the fee for information transmission, that is, the receiver promises or pledges the corresponding tokens to the transmission node of the receiver in advance to pay for the cost of information transmission. (3) The sender and the receiver pay the cost. For example, if the equivalent information transmission performs between the sender and the receiver, such as completing the asset transaction through information transmission, the sender and the receiver can each bear part of the information transmission cost in the transmission of the transaction information.

In some embodiments, the predetermined token distribution rule includes any one of the following rules. (1) After the sending acknowledgement is submitted by the first transmission node to the transmission contract, and the receipt acknowledgement is submitted by the second transmission node to the transmission contract, the tokens are proportionally distributed to the first transmission node and the second transmission node. (2) Only after the second transmission node submits the receipt acknowledgement back to the transmission contract, the tokens are distributed to the first transmission node and/or the second transmission node according to the predetermined token distribution rule in the transmission contract.

In some embodiments, when a dispute arises between the sender and the receiver, the following steps can be performed. The sender and/or the receiver submits the to-be-transmitted information or transmitted information to an arbitration party. Traceability and cross-examination are performed by the arbitration party based on the to-be-transmitted information, the transmitted information, the sender public key, the receiver public key, a first transmission node public key, and a second transmission node public key, and data submitted to the transmission contract.

Specifically, the arbitration party may rule on facts such as the node 's refusal to send information, the sent and received information, the information consistency, and the information sending time. For example, in the case of a sender *A* sending a message *m* to a receiver *B,* during the whole process from the sender to the transmission network to the receiver, the message *m* is uploaded at a digest of the message *m* of the sender, uploaded when the transmission node sends a sending conformation acknowledgement and receives a receipt conformation acknowledgement, and uploaded when the receiver reads the receipt conformation acknowledgement. In other words, the aforementioned data are all publicly available in transmission contract on the chain and are recorded in a form of immutability. If there is any dispute between the sender *A* and the receiver *B* over the status and time of information sending and receiving, *A* can submit the message *m* to the arbitration party for cross-examination. Since the sender public key, the receiver public key and the public key of the transmission node can be obtained publicly, the arbitration party can automatically complete the tracing of the chain of evidence and audit on its own, and give the result of the judgement instantly. Similarly, the receiver *B* can submit the message *m* to the arbitration party for cross-examination after receiving the message.

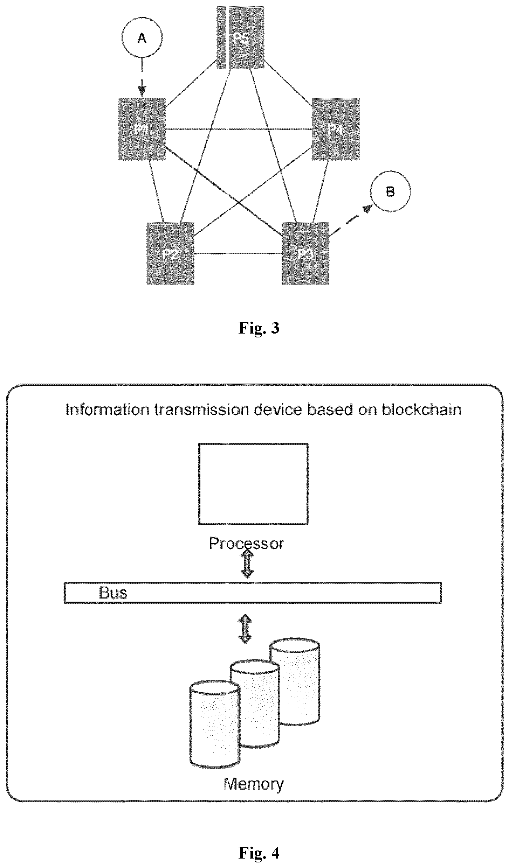

In this embodiment, the information sending and receiving process is elaborated in detail with reference to Fig. 3.

Referring to Fig. 3, a sender *A* sends a message *m* to a receiver B via a virtual transmission network, which is constituted by a total of five virtual (logical) transmission nodes *P₁, P₂, P₃, P₄,* and *P₅.* The complete processes of sending and receiving one-way information are illustrated in the following *a-h.*
(a) The sender *A* is registered at the transmission node *P₁* using the sender public key or a digest of the sender public key, the receiver *B* is registered at the transmission node *P₃* using the receiver public key or or a digest of the receiver public key, and *A* knows that *B* is registered at*P₃.*
(b) The sender *A* encrypts the message *m* using the receiver public key *B_{pub}* and then signs the message *m* using the sender private key *Aₚᵣᵢᵥ* as *m_{ab}.*
(c) The sender A creates a transmission contract *CA* on the blockchain and deposits tokens paid by the sender *A* in the transmission contract *CA,* and the number of deposited tokens is represented by *Ta.* The transmission contract *CA* may agree that after the originating node sends message *m_{ab}* (only the digests or hashes of the message *m* and *m_{ab}* are recorded in the contract) to the transmission node where the target address is located, and the target node submits the receipt acknowledgement to the contract, the originating node and the target node each receive 50% of Ta.
(d) The sender A sends the message *m_{ab}* to *P₁* and informs *P₁* of the contract address *CA.*
(e) The transmitting node *P₁* checks that the tokens are sufficient within the contract address *CA,* sends the message to transmitting node *P₃,* and submits the sending acknowledgement that the message has been sent to the transmission contract *CA.*
(f) After receiving the message, the transmission node *P₃* automatically delivers the message to the receiver *B,* and submits the receipt acknowledgement and/or delivery confirmation acknowledgement that the message has been received and delivered to the CA.
(g) Within the transmission contract *CA, Ta* is automatically assigned to 50% each of the sending node *P₁* and receiving node *P₂* according to the agreement. To avoid transmission turnover during the sending of the message, if the sender *A* does not raise any objection within a certain period of time, the receiving and sending nodes can withdraw the corresponding amount of tokens from the contract.
(h) After receiving the message *m_{ab},* the receiver B verifies the signature of the message *m_{ab}* using the sender *A* public key and decrypts the message *m_{ab}* using its own private key to get the message *m.*

The transmission network and the transmission nodes contained therein in this embodiment are described in further detail below in connection with specific implementations.

The transmission network may be a point-to-point transmission network consisting of virtual transmission nodes, and a network connection for direct and efficient communication is established between any transmission nodes for information transfer in the virtual network (or logical network).

The transmission network can realize point-to-point transmission through any one of wireless communication, optical communication, satellite communication, and Internet communication.

The transmission network may include the following three types of governance. (1) A governance committee, which is established by parties involved in the governance of the network, where the entry of virtual transmission nodes is decided by the committee by voting, and the specific rules of participation may be decided by the governance committee. (2) A centralized service platform, which is responsible for organizing and managing the transmission nodes, and the governance rules are decided by the service platform itself. (3) Distributed autonomy, i.e., a network governance by a specific community autonomy rule. If the participating nodes pledge a certain number of tokens on the chain according to the community agreement, those who reach the standard of token pledge can be selected as transmission nodes. If the transmission node fails to meet the service standard requirements agreed by the community during the service period, it will be automatically removed from the list of transmission nodes. For maintaining sustainable distributed autonomy of the community, the transmission nodes can pay service tax in the form of tokens to the community during the service period.

In some embodiments, the transmission nodes may be managed in the transmission network to maintain the normal operation of the transmission network and ensure the efficiency of the transmission network, specifically including any one or more of the following modes. A transmission node that does not meet service requirements is removed from the transmission network. A transmission node that exits irregularities is punished. An ordinary node that satisfies candidate conditions is permitted to be a candidate node in the transmission network. A candidate node that satisfies election conditions is permitted to be a transmission node in the transmission network.

In some embodiments, to remove the transmission node that does not meet service requirements from the transmission network, the following steps can be performed. When any one or more of the transmission nodes of the transmission network are detected to fail to perform an information transmission action as required within a specified time period, the any one or more of the transmission nodes is removed from the transmission network.

For example, referring to Fig. 1, if the information transmitted by the sender *A* to the first transmission node *N₁* is not delivered to the subsequent transmission nodes within a specified time period, the first transmission node *N₁* may be considered to be not compliant with the service standard, and may be removed from the transmission network and replaced with other candidate nodes to provide transmission services.

In some embodiments, the transmission network includes an auditing protocol that audits the transmission behavior of each transmission node using the on-chain data and data in the transmission contract. If evidence is found that the transmission node is not transmitting according to the predefined send/receive protocol, the transmission node is removed from the transmission network or a node penalty is applied.

Optionally, the auditing protocol may be proxied by a governance committee of the transmission network. The preset sending and receiving protocol include, but are not limited to, the transmission protocol of the transmission nodes specified in the aforementioned steps (S201)-(S206). If a transmission node with evidence of not transmitting according to the preset sending and receiving protocol is found, the transmission node may be automatically disqualified from access or be punished, and replaced with a new node according to the node replacement rule.

In some embodiments, misbehavior nodes with misbehavior are punished and are managed orderly. After detecting any one or more of misbehavior nodes exist a predetermined misbehavior, the misbehavior nodes are subjected to the following processes:
(1) the auditing party of the transmission network submits a punishment resolution against the misbehavior node on the blockchain, and the misbehavior node automatically executes relevant punishment measures according to the punishment resolution; and/or
(2) the sender and/or the receiver and/or the transmission node submits evidence against the misbehavior node on the blockchain; and the transmission nodes execute punishment against the misbehavior node in accordance with the evidence and the auditing protocol.

In some embodiments, enforcing a penalty on a misbehavior node can be done by removing the misbehavior node from the transmission network and/or paying a token fine, where the paid token fine can be considered as a deposit submitted to the blockchain in advance by the misbehavior node.

The transmission network in this embodiment is a permitted access type network. In other words, candidate transmission nodes need to be permitted by the network operator before accessing the transmission network to participate in sending and receiving information. A list of transmission nodes is distributed to the transmission nodes synchronously by the network operator.

In some embodiments, to permit an ordinary node that satisfies candidate conditions to be a candidate node in the transmission network, a node campaign contract may be deployed on the blockchain. The ordinary node can pledge a predetermined number of tokens on the node campaign contract to become the candidate node in the transmission network.

In some embodiments, to permit a candidate node that satisfies election conditions to be a transmission node in the transmission network, the node campaign contract also agrees that within the open application period, the candidate node satisfying one or more of the following conditions is allowed to become the transmission node of the transmission network.
(1) A transmission/connection rate with a related transmission node satisfies a predetermined condition, where the related transmission node is a transmission node in the transmission network that has a transmission relationship with a to-be-replaced node. For example, the candidate node with the highest transmission/connection rate to the relevant transmission node may be selected as the newly promoted transmission node.
(2) A multi-path concurrent transmission rate with the related transmission node satisfies a predetermined condition. For example, the candidate node with the highest multi-concurrent (e.g., simultaneous transmission of 10 high-capacity messages) transmission rate with the relevant transmission node may be selected as the newly promoted transmission node.

In some embodiments, where the physical hard limiting metrics of the candidate nodes are equal or do not differ much, the following election modes are also considered to ensure that the candidate nodes are able to provide a transmission service that meets the service standards.

(3) The number of tokens pledged to the node campaign contract within an open time window satisfies a third predetermined condition. For example, pledging a certain amount of tokens on the chain qualifies a candidate node, and at the termination of the open time window, the candidate node with the highest number of pledged tokens is selected as the newly promoted transmission node, or one or more of a plurality of candidate nodes satisfying the condition of the number of pledged tokens is randomly selected as the newly promoted transmission node.

(4) The number of votes obtained from a governance board of the transmission network satisfies a fourth predetermined condition.

(5) A payment rate of a predetermined number of tokens to the node campaign contract within the open time window satisfies a fifth predetermined condition. For example, a candidate node may pay a certain amount of tokens to the chain (contract) during an open time window, and the candidate node that pays up the fastest may be selected as a newly promoted transmission node.

Upon satisfying any one or more of the above conditions and receiving permission from the operator, the candidate node may become a newly promoted transmission node of the transmission network. For example, referring to Fig. 1, the candidate node *N_{z}* may replace the transmission node *N_{y}* and obtain all data transmitted by the transmission node *N_{y},* and the operator of the transmission network broadcasts a public key of the newly selected transmission node in the network to all transmission nodes in operation, and the public key of the newly selected transmission node is also uploaded to the blockchain.

For example, when the sender *A* queries the transmission contract and finds that the transmission contract contains a sending acknowledgement of the first transmission node for the to-be-transmitted message *m,* but does not contain a receipt acknowledgement of the second transmission node for the to-be-transmitted message *m,* and the to-be-transmitted message *m* has been transmitted for a while, it may be assumed that the second transmission node fails, and the sender *A* may resend the to-be-transmitted message *m.*

The information transmission method provided in the present embodiment can be applied in a variety of use scenarios where communication security and information integrity need to be ensured, so as to improve the security of information transmission and realize automatic evidence storage and efficient quality assurance, and has a wide range of application value.

The following are exemplary enumerations of the application scenarios of the present embodiment, however, one of ordinary skill in the art may understand that the application scenarios of the information transmission method provided in the present embodiment are not limited thereto.

The information transmission method provided in the present embodiment can be applied to a secure encrypted communication scenario. Taking the communication between *A* and *B* in the information sending and receiving process as an example, in an Internet transmission environment, each operator network node may participate in undertaking the task of a transmission node with any blockchain system with publicly accessible data as the underlying blockchain support. By using the transmission method of the present disclosure, the underlying network and blockchain service support, instant secure encrypted communication or delayed email communication between *A* and *B* can be achieved.

The information transmission method provided in this embodiment can be applied in a contract dispute scenario of business cooperation. Taking the communication between *A* and *B* in the information sending and receiving process as an example, if *A* and *B* are two parties of business cooperation respectively, by using the information transmission method of the present disclosure, the two parties can achieve bidirectional safe delivery of key information through the interconnected Internet or a dedicated line of the network erected by themselves where their own transmission nodes are established. If a dispute arises between the two parties over the delivery time clause of key information in the business contract, the arbitration party may automatically complete the adjudication of the dispute based on the information on the chain, since the content recorded on the chain cannot be changed. During the adjudication, in some cases, the content of the service message is not disclosed publicly. The principle is described as follows. The sender *A* and the receiver *B* can sign and confirm the encrypted message, and the arbitration party only needs to verify the digest of the message, transmission time, and sending and receiving confirmation status recorded by the transmission node on the chain to complete the corresponding ruling. In this process, the arbitration party does not need to know the original content of the message.

The information transmission method provided in this embodiment can be applied to the transmission of key technical documents or creative manuscripts, the secure transmission of medical data, and the sending and receiving of cross-border classified information.

The information transmission method provided in the present embodiment can be applied to secure remote control of equipment. In an operation scenario of remote surgery, drones, motor vehicles and high-risk engineering vehicles or equipment, the application of the method of the present disclosure ensures that secure and efficient communication can be established between the operation terminals and the remote equipment. That is, based on a high-speed transmission network, at least two secure transmission nodes and a basic service chain are created, and a communication connection is established between the operation terminals and the remote equipment through the secure transmission nodes, respectively, so that safe and efficient manipulation can be carried out, and auditing of the command data for the control of the equipment can be realized. When encountering an operational incident, it is possible to provide reliable and traceable safety data.

The information transmission method provided in the present embodiment can be applied to secure communication usage scenarios between devices. With the popularization of the Internet of Things, self-service and autonomously capable machines and devices are gradually diversifying, and more and more collaborative scenarios between these machines and devices are developed. The method of the present disclosure can play a great role in the collaboration between machines and devices. Since the collaboration between machines has characteristics of high efficiency and automation, if the communication between machines is hijacked by cyber-attacks or hackers, it will pose immeasurable bad effects. The method of the present disclosure can support the establishment of an auditable, safe and reliable communication connection between machines, and the sending and receiving of collaboration messages and the instruction transmission between machines can be accomplished using the communication system constructed by the present disclosure, thereby ensuring safe collaboration between machines.

As used herein, the terms, such as "some possible embodiments", "some embodiments", "examples", "specific examples", and "some examples", mean that the specific features, structures, materials, or characteristics described in conjunction with the embodiment or example are included in at least one embodiment or example of the present disclosure. In this specification, schematic expressions of the above terms do not need to be directed to the same embodiment or example. Moreover, the specific features, structures, materials or characteristics described may be combined with any one or more embodiments or examples in a suitable manner. In addition, without contradicts, those skilled in the art may combine different embodiments or examples and combine features of different embodiments or examples described in this specification.

Furthermore, the terms "first" and "second" are merely used for descriptive purposes and are not to be understood as indicating or implying relative importance or implicitly specifying the number of technical features indicated. Thus, a feature defined with the term ("first" or "second") may explicitly or implicitly include at least one such feature. As used herein, the term "plurality" means at least two, e.g., two, three, etc., unless otherwise expressly and specifically limited.

Any process or method descried in the flowchart or in other ways herein may be understood to represent one or more modules, fragments or portions of codes including executable instructions for implementing the steps of a particular logical function or process. The scope of the preferred embodiments of the present disclosure includes additional implementations, where different orders than that shown or discussed may exist, and functions can be implemented in a substantially simultaneous manner according to the involved functions or in a reverse order. This should be understood by those skilled in the art.

With respect to the method flowcharts of the embodiments of the present application, certain operations are depicted as different steps performed in a certain order. Such a flowchart is illustrative rather than limited. Certain steps described herein may be grouped together and performed in a single operation, certain steps may be split into a plurality of sub-steps, and certain steps may be performed in a different order than shown herein. Moreover, the steps illustrated in the flowcharts may be implemented by any circuit structure and/or physical mechanism (e.g., software and hardware (e.g., processor or chip-implemented logic functions) running on a computer device, and/or any combination thereof) in any manner.

Based on the same technical concepts, this application also provides an information transmission system based on blockchain technology, which is configured to implement the aforementioned information transmission method. Fig. 1 is a schematic diagram of the information transmission system based on blockchain technology provided by an embodiment of the present disclosure.

Referring to Fig. 1, the information transmission system based on blockchain technology includes a sender *A,* a receiver *B,* a transmission network (*N₁, N₂,* ···, *Nₓ, N_{y}*), and a blockchain, where the sender *A* is registered in the first transmission node *N₁* of the transmission network, and the receiver *B* is registered in the second transmission node *N₂* of the transmission network, so that the information transmission from the sender to the receiver can be realized through the transmission network.

The sender *A* is configured to create a transmission contract on the blockchain, submit a digest of to-be-transmitted information to the transmission contract, and send a ciphertext of the to-be-transmitted information, an address of the receiver and an address of the transmission contract to a first transmission node of a transmission network.

The first transmission node is configured to send the ciphertext of the to-be-transmitted information, the address of the receiver and the address of the transmission contract point-to-point to a second transmission node of the transmission network, and generate and submit a sending acknowledgement to the transmission contract.

The second transmission node is configured to receive and send the ciphertext of the to-be-transmitted information and the address of the transmission contract to the receiver, and generate and submit a receipt acknowledgement to the transmission contract.

It should be noted that the information transmission system based on blockchain technology in the embodiments of the present application can realize the various processes of the foregoing embodiments of the information transmission method based on blockchain technology and achieve the same effects and functions, which will not be repeated here.

Fig. 4 shows an information transmission device based on blockchain technology according to an embodiment of the present application for implementing the information transmission method illustrated in Fig. 2. The information transmission device includes at least one processor and a memory in communication connection to the at least one processor, where the memory is configured to store an instruction executable by the at least one processor, and the instruction is configured to be executed by the at least one processor to perform the aforementioned information transmission method.

According to some embodiments of the present application, a non-volatile computer storage medium for the aforementioned information transmission method is also provided, on which computer-executable instructions are stored. The computer-executable instruction is configured to execute, when run by a processor, the method described in the above embodiments.

Each embodiment in this application is described in a progressive manner, and the same and similar parts of each embodiment can refer to each other. Each embodiment focuses on the differences from other embodiments. In particular, for the embodiments directed to the apparatus, device, and computer-readable storage medium, since they are substantially similar to the method embodiments, their descriptions are simplified, and the relevant points can be found in the partial description of the method embodiments.

The device, apparatus, and computer-readable storage medium provided in the embodiments of the present application are in one-to-one correspondence with the method, and thus have beneficial technical effects similar to those of the method to which they correspond. Since the beneficial technical effects of the method are described in detail above, the beneficial technical effects of the device, apparatus, and computer-readable storage medium will not be repeated here.

It should be understood by those skilled in the art that embodiments of the present disclosure may be provided as methods, systems, or computer program products. Thus, the present disclosure may take the form of a fully hardware embodiment, a fully software embodiment, or an embodiment that combines software and hardware aspects. Furthermore, the present disclosure may take the form of a computer program product implemented on one or more computer-usable storage media (including, but not limited to, disk memory, CD-ROM, optical memory, and the like) containing computer-usable program code therein.

The present disclosure is described with reference to flowcharts and/or block diagrams of methods, devices (systems), and computer program products according to embodiments of the present disclosure. It should be understood that each of the processes and/or boxes in the flowchart and/or block diagram, and the combination of processes and/or boxes in the flowchart and/or block diagram, may be implemented by computer program instructions. These computer program instructions may be provided to a processor of a general-purpose computer, a special-purpose computer, an embedded processor, or other programmable data-processing device to produce a machine such that the instructions executed by the processor of the computer or other programmable data-processing device produce a device for carrying out the functions specified in one or more processes of the flowchart and/or one or more boxes of the block diagram.

These computer program instructions may also be stored in a computer-readable memory capable of directing a computer or other programmable data processing device to operate in a particular manner, so that the instructions stored in that computer-readable memory produce an article of manufacture including an instructional device that implements functions specified in one or more processes of the flowchart and/or one or more boxes of the block diagram.

These computer program instructions may also be loaded onto a computer or other programmable data processing device such that a series of operational steps are performed on the computer or other programmable device to produce computer-implemented processing, such that the instructions performed on the computer or other programmable device provide instructions for carrying out the functions specified in one or more processes of the flowchart and/or one or more boxes of the block diagram.

In an exemplary configuration, the computing device includes one or more processors (CPUs), input/output interfaces, a network interface, and a memory.

The memory may include the forms of non-permanent memory in a computer readable medium, random access memory (RAM), and/or non-volatile memory, such as read-only memory (ROM) or flash memory (flash RAM). The memory is an example of a computer-readable medium.

The computer-readable media includes permanent media, non-permanent media, removable media and non-removable media, and may be implemented by any method or technique for information storage. The information may be computer-readable instructions, data structures, modules of a programme, or other data. The storage media for computers include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technologies, read-only discs with read-only memory (CD-ROM), read-only memory (CD-ROM), digital versatile disc (DVD) or other optical storage, magnetic cartridge tapes, magnetic tape disk storage or other magnetic storage devices or any other non-transfer media that can be used to store information accessed by a computing device. Furthermore, although the operations of the method of the present disclosure are described in the accompanying drawings in a particular order, it is not required or implied that the operations must be performed in that particular order or that all of the operations shown must be performed to achieve the desired results. Additionally or alternatively, certain steps may be omitted, multiple steps may be combined to be performed as a single step, and/or a single step may be divided to be performed as multiple steps.

Although the principles of the application have been described with reference to a number of specific embodiments, it should be understood that the present disclosure is not limited to these specific embodiments. Furthermore, the division of aspects does not mean that features in those aspects cannot be combined for benefit, and such divisions are made merely for convenience of presentation. The present disclosure is intended to cover various modifications and equivalent arrangements included within the scope of the appended claims.

## Claims

1. An information transmission method based on blockchain, comprising:
creating, by a sender, a transmission contract on a blockchain; submitting a digest of to-be-transmitted information to the transmission contract; and sending a ciphertext of the to-be-transmitted information, an address of a receiver and an address of the transmission contract to a first transmission node of a transmission network, wherein the sender is registered at the first transmission node of the transmission network;
sending, by the first transmission node, the ciphertext of the to-be-transmitted information, the address of the receiver and the address of the transmission contract to a second transmission node of the transmission network in a point-to-point manner, wherein the receiver is registered at the second transmission node of the transmission network; and
receiving, by the second transmission node, the ciphertext of the to-be-transmitted information and the address of the transmission contract; sending, by the second transmission node, the ciphertext of the to-be-transmitted information and the address of the transmission contract to the receiver; and generating a receipt acknowledgement confirming that the ciphertext of the to-be-transmitted information and the address of the transmission contract have been received, and submitting the acknowledgement receipt to the transmission contract.

2. The information transmission method according to claim 1, **characterized in that** when or after the first transmission node sends the ciphertext of the to-be-transmitted information, the address of the receiver and the address of the transmission contract to the second transmission node in a point-to-point manner, the information transmission method further comprises:
generating a sending acknowledgement confirming that the ciphertext of the to-be-transmitted information, the address of the receiver and the address of the transmission contract have been sent, and submitting the sending acknowledgement to the transmission contract; and
the transmission contract further comprises a predetermined token distribution rule and tokens submitted by the sender and/or the receiver, and is configured to distribute the tokens to one or more of the first transmission node, the second transmission node and the receiver based on the predetermined token distribution rule and data submitted to the transmission contract;
the sender is provided with a sender public key and a sender private key obtained based on an asymmetric encryption algorithm; and an address of the sender is identified by using the sender public key or a digest thereof;
the receiver is provided with a receiver public key and a receiver private key obtained based on the asymmetric encryption algorithm; and the address of the receiver is identified by using the receiver public key or a digest thereof; and
the transmission network comprises at least two transmission nodes comprising the first transmission node and the second transmission node, wherein each of the at least two transmission nodes has a public key and a private key obtained based on the asymmetric encryption algorithm; and a node address of each of the at least two transmission nodes is identified by using the public key or a digest thereof;
wherein the address of the sender, the address of receiver and the address of each of the at least two transmission nodes are publicly available on the blockchain;
a sequence of information sent by the first transmission node is the same as a sequence of information received by the second transmission node;
the transmission contract further comprises a token charge rule; and the token charge rule is negotiated by one or more of the sender, the receiver, the first transmission node and the second transmission node; and
the token charge rule comprises any one of the following rules: (1) payment of tokens by the sender; (2) precommitment or pledge of a predetermined number of tokens by the receiver to the second transmission node; and (3) shared payment of tokens by the sender and the receiver;
the predetermined token distribution rule comprises any one of the following rules:
(1) after the sending acknowledgement is submitted by the first transmission node to the transmission contract, and the receipt acknowledgement is submitted by the second transmission node to the transmission contract, proportionally distributing the tokens to the first transmission node and the second transmission node; and
(2) only after the second transmission node submits the receipt acknowledgement to the transmission contract, distributing the tokens to the first transmission node and/or the second transmission node according to the predetermined token distribution rule in the transmission contract;
wherein when a dispute arises between the sender and the receiver, the information transmission method further comprises:
submitting, by the sender and/or the receiver, the to-be-transmitted information or transmitted information to an arbitration party; and
performing, by the arbitration party, automatic tracing and cross-examination based on the to-be-transmitted information or the transmitted information, the sender public key, the receiver public key, the public key of the first transmission node, and the public key of the second transmission node, and data submitted to the transmission contract.

3. The information transmission method according to claim 2, further comprising:
registering a root domain name on the blockchain using the public key of each of the at least two transmission nodes;
registering a sender domain name based on the root domain name of the first transmission node using the sender public key of the sender;
registering a receiver domain name based on the root domain name of the second transmission node using the receiver public key of the receiver; and
making the root domain name, the sender domain name and the receiver domain name of each of the at least two transmission nodes publicly available on the blockchain.

4. The information transmission method according to claim 2, further comprising:
generating, by the sender, the ciphertext of the to-be-transmitted information through steps of:
encrypting, by the sender, the to-be-transmitted information using the receiver public key; and signing the to-be-transmitted information using the sender private key to generate the ciphertext of the to-be-transmitted information; and
decrypting, by the receiver, the ciphertext of the to-be-transmitted information through steps of:
verifying, by the receiver, a signature of the ciphertext using the sender public key; and decrypting the ciphertext using the receiver private key.

5. The information transmission method according to claim 2, further comprising:
signing and confirming, by the first transmission node, the ciphertext of the to-be-transmitted information using the private key of the first transmission node to generate a sending confirmation acknowledgement when sending the ciphertext of the to-be-transmitted information; and uploading the sending confirmation acknowledgement to the blockchain; and/or
signing and confirming, by the second transmission node, the ciphertext of the to-be-transmitted information using the private key of the second transmission node to generate the receipt acknowledgement when receiving the ciphertext of the to-be-transmitted information; and uploading the receipt acknowledgement to the blockchain.

6. The information transmission method according to claim 5, further comprising:
signing and confirming, by the second transmission node, the ciphertext of the to-be-transmitted information using the private key of the second transmission node to generate a delivery confirmation acknowledgement when delivering the ciphertext of the to-be-transmitted information to the receiver; and uploading the delivery confirmation acknowledgement to the blockchain.

7. The information transmission method according to claim 5, further comprising:
checking, by the first transmission node, whether the transmission contract contains a predetermined number of tokens before sending the ciphertext of the to-be-transmitted information to the second transmission node in a point-to-point manner, and if not, refusing to send the to-be-transmitted information.

8. The information transmission method according to claim 1, **characterized in that** the transmission network comprises an auditing protocol; and the information transmission method further comprises:
auditing transmission behavior of each of the at least two transmission nodes based on the auditing protocol using on-chain data and data of the transmission contract; and
if evidence is found that a transmission node does not perform transmission according to a predetermined sending and receiving protocol, removing the transmission node from the transmission network or punishing the transmission node.

9. The information transmission method according to claim 1, **characterized in that** the transmission network is a virtual network, and each of the first transmission node and the second transmission node is a virtual node.

10. The information transmission method according to claim 1, **characterized in that** the transmission network is configured to realize point-to-point transmission through wireless communication, optical communication, satellite communication, or internet communication.

11. The information transmission method according to claim 1, further comprising:
managing transmission nodes in the transmission network by using one or more of the following rules:
removing a transmission node that does not meet service requirements from the transmission network;
punishing a transmission node with misbehavior;
permitting an ordinary node that satisfies candidate conditions to be a candidate node in the transmission network; and
permitting a candidate node that satisfies election conditions to be a transmission node in the transmission network;
wherein the step of removing a transmission node that does not meet service requirements from the transmission network further comprises:
when any one or more of the transmission nodes of the transmission network are detected to fail to perform an information transmission action as required within a specified time period, removing the any one or more transmission nodes from the transmission network;
the step of punishing a transmission node with misbehavior comprises:
after detecting the presence of a transmission node having a predetermined misbehavior, which is defined as a misbehavior node, submitting, by an auditing party of the transmission network, a punishment resolution against the misbehavior node on the blockchain; and automatically executing relevant punishment measures by the transmission nodes according to the punishment resolution; and/or
submitting, by at least one of the sender, the receiver and the transmission nodes, evidence against the misbehavior of the misbehavior node on the blockchain; and executing, by the transmission nodes, punishment against the misbehavior node in accordance with the evidence and an auditing protocol.

12. The information transmission method according to claim 1, **characterized in that** the step of permitting an ordinary node that satisfies candidate conditions to be a candidate node in the transmission network further comprises:
deploying a node campaign contract on the blockchain; and allowing an ordinary node that pledges a predetermined number of tokens on the node campaign contract to become the candidate node in the transmission network.

13. The information transmission method according to claim 1, **characterized in that** the step of permitting a candidate node that satisfies election conditions to be a transmission node in the transmission network further comprises:
allowing the candidate node satisfying one or more of the following conditions to become the transmission node of the transmission network:
(1) a transmission/connection rate with a related transmission node satisfies a first predetermined condition, wherein the related transmission node is a transmission node in the transmission network that has a transmission relationship with a to-be-replaced node;
(2) a multi-path concurrent transmission rate with the related transmission node satisfies a second predetermined condition;
(3) the number of tokens pledged to the node campaign contract within an open time window satisfies a third predetermined condition;
(4) the number of votes obtained from a governance board of the transmission network satisfies a fourth predetermined condition; and
(5) a payment rate of a predetermined number of tokens to the node campaign contract within the open time window satisfies a fifth predetermined condition.

14. An information transmission system, being configured to implement the information transmission method according to any one of claims 1-13, comprising:
a sender;
a receiver;
a transmission network; and
a blockchain;
**characterized in that** the sender is configured to create a transmission contract on the blockchain, submit a digest of to-be-transmitted information to the transmission contract, and send a ciphertext of the to-be-transmitted information, an address of the receiver and an address of the transmission contract to a first transmission node of the transmission network, wherein the sender is configured to be registered at the first transmission node of the transmission network;
the first transmission node is configured to send the ciphertext of the to-be-transmitted information, the address of the receiver and the address of the transmission contract to a second transmission node of the transmission network in a point to point manner, wherein the receiver is configured to be registered at the second transmission node of the transmission network; and
the second transmission node is configured to receive the ciphertext of the to-be-transmitted information and the address of the transmission contract, and send the ciphertext of the to-be-transmitted information and the address of the transmission contract to the receiver, and generate and submit a receipt acknowledgement to the transmission contract.

15. An information transmission device based on blockchain, comprising:
at least one processor; and
a memory in communication connection to the at least one processor;
**characterized in that** the memory is configured to store an instruction executable by the at least one processor, and the instruction is configured to be executed by the at least one processor to perform the information transmission method according to any one of claims **1-**13.

## Patentansprüche

1. Verfahren zur Informationsübertragung basierend auf Blockchain, das Folgendes umfasst:
Erstellen eines Übertragungsvertrags auf einer Blockchain durch einen Sender; Übermitteln eines Digests der zu übertragenden Information an den Übertragungsvertrag; und Senden eines Geheimtexts der zu übertragenden Information, einer Adresse eines Empfängers und einer Adresse des Übertragungsvertrags an einen ersten Übertragungsknoten eines Übertragungsnetzwerks, wobei der Sender bei dem ersten Übertragungsknoten des Übertragungsnetzwerks registriert ist;
Senden des Geheimtexts der zu übertragenden Information, der Adresse des Empfängers und der Adresse des Übertragungsvertrags durch den ersten Übertragungsknoten an einen zweiten Übertragungsknoten des Übertragungsnetzwerks in Form einer Punkt-zu-Punkt-Verbindung, wobei der Empfänger bei dem zweiten Übertragungsknoten des Übertragungsnetzwerks registriert ist; und
Empfangen des Geheimtexts der zu übertragenden Information und der Adresse des Übertragungsvertrags durch den zweiten Übertragungsknoten; Senden des Geheimtextes der zu übertragenden Information und der Adresse des Übertragungsvertrags durch den zweiten Übertragungsknoten an den Empfänger; und Generieren einer Empfangsbestätigung, die bestätigt, dass der Geheimtext der zu übertragenden Information und die Adresse des Übertragungsvertrags empfangen wurden, und Übermitteln der Empfangsbestätigung an den Übertragungsvertrag.

2. Verfahren zur Informationsübertragung nach Anspruch 1, **dadurch gekennzeichnet, dass**, wenn oder nachdem der erste Übertragungsknoten den Geheimtext der zu übertragenden Information, die Adresse des Empfängers und die Adresse des Übertragungsvertrags in Form einer Punkt-zu-Punkt-Verbindung an den zweiten Übertragungsknoten sendet, das Verfahren zur Informationsübertragung ferner Folgendes umfasst:
Generieren einer Sendebestätigung, die bestätigt, dass der Geheimtext der zu übertragenden Information, die Adresse des Empfängers und die Adresse des Übertragungsvertrags gesendet wurden, und Übermitteln der Sendebestätigung an den Übertragungsvertrag; und
wobei der Übertragungsvertrag ferner eine vorbestimmte Token-Verteilungsregel und vom Sender und/oder Empfänger übermittelte Token umfasst und dazu konfiguriert ist, die Token basierend auf der vorbestimmten Token-Verteilungsregel und den an den Übertragungsvertrag übermittelten Daten an einen oder mehrere von dem ersten Übertragungsknoten, dem zweiten Übertragungsknoten und dem Empfänger zu verteilen;
wobei der Sender mit einem öffentlichen Schlüssels des Senders und einem privaten Schlüssels des Senders versehen ist, die basierend auf einem asymmetrischen Verschlüsselungsalgorithmus erhalten werden; und wobei eine Adresse des Senders unter Verwendung des öffentlichen Schlüssels des Senders oder eines Digests davon identifiziert wird;
wobei der Empfänger mit einem öffentlichen Schlüssel des Empfängers und einem privaten Schlüssel des Empfängers versehen ist, die basierend auf dem asymmetrischen Verschlüsselungsalgorithmus erhalten werden; und wobei die Adresse des Empfängers unter Verwendung des öffentlichen Schlüssels des Empfängers oder eines Digests davon identifiziert wird; und
wobei das Übertragungsnetzwerk aus mindestens zwei Übertragungsknoten besteht, die den ersten Übertragungsknoten und den zweiten Übertragungsknoten umfassen, wobei jeder der mindestens zwei Übertragungsknoten einen öffentlichen Schlüssel und einen privaten Schlüssel aufweist, die basierend auf dem asymmetrischen Verschlüsselungsalgorithmus erhalten werden; und wobei eine Knotenadresse jedes der mindestens zwei Übertragungsknoten unter Verwendung des öffentlichen Schlüssels oder eines Digests davon identifiziert wird;
wobei die Adresse des Senders, die Adresse des Empfängers und die Adresse jedes der mindestens zwei Übertragungsknoten auf der Blockchain öffentlich verfügbar sind;
wobei eine vom ersten Übertragungsknoten gesendete Informationenfolge mit einer vom zweiten Übertragungsknoten empfangenen Informationenfolge identisch ist;
wobei der Übertragungsvertrag ferner eine Token-Gebührenregel umfasst; und die Token-Gebührenregel von einem oder mehreren von dem Sender, dem Empfänger, dem ersten Übertragungsknoten und dem zweiten Übertragungsknoten ausgehandelt wird; und
wobei die Token-Gebührenregel eine der folgenden Regeln umfasst: (1) Zahlung der Token durch den Sender; (2) Vorabverpflichtung oder Verpfändung einer vorbestimmten Anzahl von Token durch den Empfänger an den zweiten Übertragungsknoten; und (3) gemeinsame Zahlung der Token durch den Sender und den Empfänger;
wobei die vorbestimmte Token-Verteilungsregel eine der folgenden Regeln umfasst:
(1) Proportionale Verteilung der Token an den ersten Übertragungsknoten und den zweiten Übertragungsknoten, nachdem die Sendebestätigung vom ersten Übertragungsknoten an den Übertragungsvertrag übermittelt und die Empfangsbestätigung vom zweiten Übertragungsknoten an den Übertragungsvertrag übermittelt wurde; und
(2) Verteilung der Token an den ersten Übertragungsknoten und/oder den zweiten Übertragungsknoten gemäß der vorbestimmten Token-Verteilungsregel im Übertragungsvertrag, erst nachdem der zweite Übertragungsknoten die Empfangsbestätigung an den Übertragungsvertrag übermittelt hat;
wobei bei einer Streitigkeit zwischen dem Sender und dem Empfänger das Verfahren zur Informationsübertragung ferner Folgendes umfasst:
Übermittln der zu übertragenden Information oder der übertragenen Information durch den Sender und/oder den Empfänger an eine arbitrierende Partei; und
Durchführen automatischer Ablaufverfolgung und Gegenprüfung durch die arbitrierende Partei basierend auf der zu übertragenden Information oder der übertragenen Information, dem öffentlichen Schlüssel des Senders, dem öffentlichen Schlüssel des Empfängers, dem öffentlichen Schlüssel des ersten Übertragungsknotens und dem öffentlichen Schlüssel des zweiten Übertragungsknotens sowie den an den Übertragungsvertrag übermittelten Daten.

3. Verfahren zur Informationsübertragung nach Anspruch 2, das ferner Folgendes umfasst:
Registrieren eines Stammdomänennamens bei der Blockchain unter Verwendung des öffentlichen Schlüssels jedes der mindestens zwei Übertragungsknoten;
Registrieren eines Sender-Domänennamens basierend auf dem Stammdomänennamen des ersten Übertragungsknotens unter Verwendung des öffentlichen Schlüssels des Senders;
Registrieren eines Empfänger-Domänennamens basierend auf dem StammDomänennamen des zweiten Übertragungsknotens unter Verwendung des öffentlichen Schlüssels des Empfängers; und
Veröffentlichen des Stammdomänennamens, des Sender-Domänennamens und des Empfänger-Domänennamens jedes der mindestens zwei Übertragungsknoten auf der Blockchain.

4. Verfahren zur Informationsübertragung nach Anspruch 2, das ferner Folgendes umfasst:
Generieren des Geheimtexts der zu übertragenden Information durch den Sender mittels folgender Schritte:
Verschlüsseln der zu übertragenden Information durch den Sender unter Verwendung des öffentlichen Schlüssels des Empfängers; und Signieren der zu übertragenden Information unter Verwendung des privaten Schlüssels des Senders, um den Geheimtext der zu übertragenden Information zu generieren; und
Entschlüsseln des Geheimtextes der zu übertragenden Information durch den Empfänger mittels folgender Schritte:
Überprüfen einer Signatur des Geheimtextes durch den Empfänger unter Verwendung des öffentlichen Schlüssels des Senders; und Entschlüsseln des Geheimtextes unter Verwendung des privaten Schlüssels des Empfängers.

5. Verfahren zur Informationsübertragung nach Anspruch 2, das ferner Folgendes umfasst:
Signieren und Bestätigen des Geheimtexts der zu übertragenden Information durch den ersten Übertragungsknoten unter Verwendung des privaten Schlüssels des ersten Übertragungsknotens, um eine Sendebestätigung beim Senden des Geheimtexts der zu übertragenden Information zu generieren; und Hochladen der Sendebestätigung auf die Blockchain; und/oder
Signieren und Bestätigen des Geheimtexts der zu übertragenden Information durch den zweiten Übertragungsknoten unter Verwendung des privaten Schlüssels des zweiten Übertragungsknotens, um die Empfangsbestätigung beim Empfang des Geheimtexts der zu übertragenden Information zu generieren; und Hochladen der Empfangsbestätigung auf die Blockchain.

6. Verfahren zur Informationsübertragung nach Anspruch 5, das ferner Folgendes umfasst:
Signieren und Bestätigen des Geheimtexts der zu übertragenden Information durch den zweiten Übertragungsknoten unter Verwendung des privaten Schlüssels des zweiten Übertragungsknotens, um eine Lieferbestätigung bei der Lieferung des Geheimtexts der zu übertragenden Information an den Empfänger zu generieren; und Hochladen der Lieferbestätigung auf die Blockchain.

7. Verfahren zur Informationsübertragung nach Anspruch 5, das ferner Folgendes umfasst:
Überprüfen durch den ersten Übertragungsknoten, ob der Übertragungsvertrag vor dem Senden des Geheimtexts der zu übertragenden Information an den zweiten Übertragungsknoten in Form einer Punkt-zu-Punkt-Verbindung eine vorbestimmte Anzahl von Tokens enthält, und wenn nicht, Verweigern des Sendens der zu übertragenden Information.

8. Verfahren zur Informationsübertragung nach Anspruch 1, **dadurch gekennzeichnet, dass** das Übertragungsnetzwerk ein Auditprotokoll umfasst; und das Verfahren zur Informationsübertragung ferner Folgendes umfasst:
Auditieren des Übertragungsverhaltens jedes der mindestens zwei Übertragungsknoten basierend auf dem Auditprotokoll unter Verwendung von On-Chain-Daten und Daten des Übertragungsvertrags; und
Entfernen des Übertragungsknotens aus dem Übertragungsnetzwerk oder Bestrafen des Übertragungsknotens, falls Beweise dafür gefunden werden, dass ein Übertragungsknoten die Übertragung nicht gemäß einem vorbestimmten Sende- und Empfangsprotokoll durchführt.

9. Verfahren zur Informationsübertragung nach Anspruch 1, **dadurch gekennzeichnet, dass** das Übertragungsnetzwerk ein virtuelles Netzwerk ist und jeder von dem ersten Übertragungsknoten und dem zweiten Übertragungsknoten ein virtueller Knoten ist.

10. Verfahren zur Informationsübertragung nach Anspruch 1, **dadurch gekennzeichnet, dass** das Übertragungsnetzwerk dazu konfiguriert ist, eine Punkt-zu-Punkt-Übertragung durch drahtlose Kommunikation, optische Kommunikation, Satellitenkommunikation oder Internetkommunikation zu realisieren.

11. Verfahren zur Informationsübertragung nach Anspruch 1, das ferner Folgendes umfasst:
Verwalten von Übertragungsknoten im Übertragungsnetzwerk unter Verwendung einer oder mehrerer der folgenden Regeln:
Entfernen eines Übertragungsknotens, der die Serviceanforderungen nicht erfüllt, aus dem Übertragungsnetzwerk;
Bestrafen eines Übertragungsknotens mit Fehlverhalten;
Erlauben eines üblichen Knotens, der die Kandidatenbedingungen erfüllt, ein Kandidatenknoten im Übertragungsnetz zu werden; und
Erlauben eines Kandidatenknotens, der die Wahlbedingungen erfüllt, ein Übertragungsknoten im Übertragungsnetz zu werden;
wobei der Schritt des Entfernens eines Übertragungsknotens, der die Serviceanforderungen nicht erfüllt, aus dem Übertragungsnetzwerk ferner Folgendes umfasst:
Entfernen der einen oder mehreren Übertragungsknoten aus dem Übertragungsnetzwerk, wenn erkannt wird, dass einer oder mehrere der Übertragungsknoten des Übertragungsnetzwerks eine Informationsübertragungsaktion nicht wie erforderlich innerhalb eines festgelegten Zeitraums durchführen;
wobei der Schritt des Bestrafens eines Übertragungsknotens mit Fehlverhalten Folgendes umfasst:
Übermitteln einer Entscheidung über die Bestrafung gegen den Fehlverhaltensknoten durch eine auditierende Partei des Übertragungsnetzwerks auf der Blockchain nach dem Erkennen eines Übertragungsknotens mit einem vorbestimmten Fehlverhalten, der als Fehlverhaltensknoten definiert ist; und automatisches Ausführen relevanter Strafmaßnahmen durch die Übertragungsknoten gemäß der Entscheidung über die Bestrafung; und/oder
Übermittln von Beweisen für das Fehlverhalten des Fehlverhaltensknotens auf der Blockchain durch mindestens einen von dem Sender, dem Empfänger und den Übertragungsknoten; und Ausführen einer Bestrafung gegen den Fehlverhaltensknoten durch die Übertragungsknoten gemäß den Beweisen und einem Auditprotokoll.

12. Verfahren zur Informationsübertragung nach Anspruch 1, **dadurch gekennzeichnet, dass** der Schritt des Erlaubens eines üblichen Knotens, der die Kandidatenbedingungen erfüllt, ein Kandidatenknoten im Übertragungsnetz zu werden, ferner Folgendes umfasst:
Bereitstellen eines Knoten-Kampagnenvertrags auf der Blockchain; und Erlauben eines üblichen Knotens, der eine vorbestimmte Anzahl von Token auf den Knoten-Kampagnenvertrag verpfändet, der Kandidatenknoten im Übertragungsnetzwerk zu werden.

13. Verfahren zur Informationsübertragung nach Anspruch 1, **dadurch gekennzeichnet, dass** der Schritt des Erlaubens eines Kandidatenknotens, der die Wahlbedingungen erfüllt, ein Übertragungsknoten im Übertragungsnetzwerk zu werden, ferner Folgendes umfasst:
Erlauben des Kandidatenknotens, der eine oder mehrere der folgenden Bedingungen erfüllt, der Übertragungsknoten des Übertragungsnetzwerks zu werden:
(1) eine Übertragungs-/Verbindungsrate mit einem zugehörigen Übertragungsknoten eine erste vorbestimmte Bedingung erfüllt, wobei der zugehörige Übertragungsknoten ein Übertragungsknoten im Übertragungsnetzwerk ist, der eine Übertragungsbeziehung mit einem zu ersetzenden Knoten hat;
(2) eine parallele Mehrwegeübertragungsrate mit dem zugehörigen Übertragungsknoten eine zweite vorbestimmte Bedingung erfüllt;
(3) die Anzahl der Token, die innerhalb eines offenen Zeitfensters auf den Knoten-Kampagnenvertrag verpfändet werden, eine dritte vorbestimmte Bedingung erfüllt;
(4) die Anzahl der Stimmen, die von einem Verwaltungsrat des Übertragungsnetzwerks erhalten werden, eine vierte vorbestimmte Bedingung erfüllt; und
(5) eine Zahlungsrate einer vorbestimmten Anzahl von Token an den Knoten-Kampagnenvertrag innerhalb des offenen Zeitfensters eine fünfte vorbestimmte Bedingung erfüllt.

14. System zur Informationsübertragung, das zur Implementierung des Verfahrens zur Informationsübertragung nach einem der Ansprüche 1 bis 13 konfiguriert ist, umfassend:
einen Sender;
einen Empfänger;
ein Übertragungsnetzwerk; und
eine Blockchain;
**dadurch gekennzeichnet, dass** der Sender dazu konfiguriert ist, einen Übertragungsvertrag auf der Blockchain zu erstellen, einen Digest der zu übertragenden Information an den Übertragungsvertrag zu übermitteln und einen Geheimtext der zu übertragenden Information, eine Adresse des Empfängers und eine Adresse des Übertragungsvertrags an einen ersten Übertragungsknoten des Übertragungsnetzwerks zu senden, wobei der Sender dazu konfiguriert ist, bei dem ersten Übertragungsknoten des Übertragungsnetzwerks registriert zu sein;
dass der erste Übertragungsknoten dazu konfiguriert ist, den Geheimtext der zu übertragenden Information, die Adresse des Empfängers und die Adresse des Übertragungsvertrags in Form einer Punkt-zu-Punkt-Verbindung an einen zweiten Übertragungsknoten des Übertragungsnetzwerks zu senden, wobei der Empfänger dazu konfiguriert ist, bei dem zweiten Übertragungsknoten des Übertragungsnetzwerks registriert zu sein; und
dass der zweite Übertragungsknoten dazu konfiguriert ist, den Geheimtext der zu übertragenden Information und die Adresse des Übertragungsvertrags zu empfangen, den Geheimtext der zu übertragenden Information und die Adresse des Übertragungsvertrags an den Empfänger zu senden und eine Empfangsbestätigung zu generieren und an den Übertragungsvertrag zu übermitteln.

15. Vorrichtung zur Informationsübertragung basierend auf Blockchain, umfassend:
mindestens einen Prozessor; und
einen Speicher, der mit dem mindestens einen Prozessor in Kommunikationsverbindung steht;
**dadurch gekennzeichnet, dass** der Speicher dazu konfiguriert ist, eine von dem mindestens einen Prozessor ausführbare Anweisung zu speichern, und die Anweisung dazu konfiguriert ist, von dem mindestens einen Prozessor ausgeführt zu werden, um das Verfahren zur Informationsübertragung nach einem der Ansprüche 1 bis 13 durchzuführen.

## Revendications

1. Procédé de transmission d'information basé sur une chaîne de blocs, comprenant :
créer, par un expéditeur, un contrat de transmission sur une chaîne de blocs ; soumettre une empreinte de l'information à transmettre au contrat de transmission ; et envoyer un texte chiffré de l'information à transmettre, une adresse d'un destinataire et une adresse du contrat de transmission à un premier nœud de transmission d'un réseau de transmission, dans lequel l'expéditeur est enregistré au niveau du premier nœud de transmission du réseau de transmission ;
envoyer, par le premier nœud de transmission, le texte chiffré de l'information à transmettre, l'adresse du destinataire et l'adresse du contrat de transmission à un deuxième nœud de transmission du réseau de transmission de manière point à point, dans lequel le destinataire est enregistré au niveau du deuxième nœud de transmission du réseau de transmission ; et
recevoir, par le deuxième nœud de transmission, le texte chiffré de l'information à transmettre et l'adresse du contrat de transmission ; envoyer, par le deuxième nœud de transmission, le texte chiffré de l'information à transmettre et l'adresse du contrat de transmission au destinataire ; et générer un accusé de réception confirmant que le texte chiffré de l'information à transmettre et l'adresse du contrat de transmission ont été reçus, et soumettre l'accusé de réception au contrat de transmission.

2. Procédé de transmission d'information selon la revendication 1, **caractérisé en ce que** lorsque ou après que le premier nœud de transmission envoie le texte chiffré de l'information à transmettre, l'adresse du destinataire et l'adresse du contrat de transmission au deuxième nœud de transmission de manière point à point, le procédé de transmission d'information comprend en outre :
générer un accusé d'envoi confirmant que le texte chiffré de l'information à transmettre, l'adresse du destinataire et l'adresse du contrat de transmission ont été envoyés, et soumettre l'accusé d'envoi au contrat de transmission ; et
le contrat de transmission comprend en outre une règle de distribution des jetons prédéterminée et des jetons soumis par l'expéditeur et/ou le destinataire, et est configuré pour distribuer les jetons à un ou plusieurs parmi le premier nœud de transmission, le deuxième nœud de transmission et le destinataire sur la base de la règle de distribution des jetons prédéterminée et des données soumises au contrat de transmission ;
l'expéditeur est pourvu d'une clé publique d'expéditeur et d'une clé privée d'expéditeur obtenues sur la base d'un algorithme de chiffrement asymétrique ; et une adresse de l'expéditeur est identifiée à l'aide de la clé publique d'expéditeur ou d'une empreinte de celle-ci ;
le destinataire est pourvu d'une clé publique de destinataire et d'une clé privée de destinataire obtenues sur la base de l'algorithme de chiffrement asymétrique ; et l'adresse du destinataire est identifiée à l'aide de la clé publique de destinataire ou d'une empreinte de celle-ci ; et
le réseau de transmission comprend au moins deux nœuds de transmission comprenant le premier nœud de transmission et le deuxième nœud de transmission, dans lequel chacun des au moins deux nœuds de transmission possède une clé publique et une clé privée obtenues sur la base de l'algorithme de chiffrement asymétrique ; et une adresse du nœud de chacun des au moins deux nœuds de transmission est identifiée à l'aide de la clé publique ou d'une empreinte de celle-ci ;
dans lequel l'adresse de l'expéditeur, l'adresse du destinataire et l'adresse de chacun des au moins deux nœuds de transmission sont accessibles au public sur la chaîne de blocs;
une séquence d'information envoyée par le premier nœud de transmission est la même qu'une séquence d'information reçue par le deuxième nœud de transmission ;
le contrat de transmission comprend en outre une règle de facturation en jetons ; et la règle de facturation en jetons est négociée par un ou plusieurs parmi l'expéditeur, le destinataire, le premier nœud de transmission et le deuxième nœud de transmission ; et
la règle de facturation en jetons comprend l'une des règles suivantes : (1) paiement de jetons par l'expéditeur ; (2) préengagement ou mise en gage d'un nombre prédéterminé de jetons par le destinataire envers le deuxième nœud de transmission ; et (3) paiement partagé des jetons par l'expéditeur et le destinataire ;
la règle de distribution des jetons prédéterminée comprend l'une quelconque des règles suivantes :
(1) après que l'accusé d'envoi est soumis par le premier nœud de transmission au contrat de transmission, et que l'accusé de réception est soumis par le deuxième nœud de transmission au contrat de transmission, distribuer proportionnellement les jetons au premier nœud de transmission et au deuxième nœud de transmission ; et
(2) uniquement après que le deuxième nœud de transmission a soumis l'accusé de réception au contrat de transmission, distribuer les jetons au premier nœud de transmission et/ou au deuxième nœud de transmission selon la règle de distribution des jetons prédéterminée dans le contrat de transmission ;
dans lequel lorsqu'un litige survient entre l'expéditeur et le destinataire, le procédé de transmission d'information comprend en outre :
soumettre, par l'expéditeur et/ou le destinataire, l'information à transmettre ou l'information transmise à une partie d'arbitrage ; et
effectuer, par la partie d'arbitrage, un traçage et une vérification croisée automatiques sur la base de l'information à transmettre ou de l'information transmise, de la clé publique d'expéditeur, de la clé publique de destinataire, de la clé publique du premier nœud de transmission et de la clé publique du deuxième nœud de transmission, ainsi que des données soumises au contrat de transmission.

3. Procédé de transmission d'information selon la revendication 2, comprenant en outre :
enregistrer un nom de domaine racine sur la chaîne de blocs à l'aide de la clé publique de chacun des au moins deux nœuds de transmission ;
enregistrer un nom de domaine d'expéditeur basé sur le nom de domaine racine du premier nœud de transmission à l'aide de la clé publique d'expéditeur de l'expéditeur ;
enregistrer un nom de domaine de destinataire basé sur le nom de domaine racine du deuxième nœud de transmission à l'aide de la clé publique de destinataire du destinataire ; et
rendre le nom de domaine racine, le nom de domaine d'expéditeur et le nom de domaine de destinataire de chacun des au moins deux nœuds de transmission accessibles au public sur la chaîne de blocs.

4. Procédé de transmission d'information selon la revendication 2, comprenant en outre :
générer, par l'expéditeur, le texte chiffré de l'information à transmettre à travers les étapes suivantes :
chiffrer, par l'expéditeur, l'information à transmettre à l'aide de la clé publique de destinataire ; et signer l'information à transmettre à l'aide de la clé privée d'expéditeur afin de générer le texte chiffré de l'information à transmettre ; et
décrypter, par le destinataire, le texte chiffré de l'information à transmettre, à travers les étapes suivantes :
vérifier, par le destinataire, une signature du texte chiffré à l'aide de la clé publique d'expéditeur ; et déchiffrer le texte chiffré à l'aide de la clé privée de destinataire.

5. Procédé de transmission d'information selon la revendication 2, comprenant en outre :
signer et confirmer, par le premier nœud de transmission, le texte chiffré de l'information à transmettre à l'aide de la clé privée du premier nœud de transmission afin de générer un accusé de confirmation d'envoi lors de l'envoi du texte chiffré de l'information à transmettre ; et télécharger l'accusé de confirmation d'envoi vers la chaîne de blocs ; et/ou
signer et confirmer, par le deuxième nœud de transmission, le texte chiffré de l'information à transmettre à l'aide de la clé privée du deuxième nœud de transmission afin de générer l'accusé de réception lors de la réception du texte chiffré de l'information à transmettre ; et télécharger l'accusé de réception vers la chaîne de blocs.

6. Procédé de transmission d'information selon la revendication 5, comprenant en outre :
signer et confirmer, par le deuxième nœud de transmission, le texte chiffré de l'information à transmettre à l'aide de la clé privée du deuxième nœud de transmission afin de générer un accusé de confirmation de livraison lors de la livraison du texte chiffré de l'information à transmettre au destinataire ; et télécharger l'accusé de confirmation de livraison vers la chaîne de blocs.

7. Procédé de transmission d'information selon la revendication 5, comprenant en outre :
vérifier, par le premier nœud de transmission, si le contrat de transmission contient un nombre prédéterminé de jetons avant d'envoyer le texte chiffré de l'information à transmettre au deuxième nœud de transmission de manière point à point, et si ce n'est pas le cas, refuser d'envoyer l'information à transmettre.

8. Procédé de transmission d'information selon la revendication 1, **caractérisé en ce que** le réseau de transmission comprend un protocole d'audit ; et le procédé de transmission d'information comprend en outre :
auditer le comportement de transmission de chacun des au moins deux nœuds de transmission sur la base du protocole d'audit à l'aide des données en chaîne et des données du contrat de transmission ; et
si une preuve est trouvée indiquant qu'un nœud de transmission n'effectue pas la transmission selon un protocole d'envoi et de réception prédéterminé, retirer le nœud de transmission du réseau de transmission ou sanctionner le nœud de transmission.

9. Procédé de transmission d'information selon la revendication 1, **caractérisé en ce que** le réseau de transmission est un réseau virtuel, et chacun du premier nœud de transmission et du deuxième nœud de transmission est un nœud virtuel.

10. Procédé de transmission d'information selon la revendication 1, **caractérisé en ce que** le réseau de transmission est configuré pour réaliser une transmission point à point par communication sans fil, communication optique, communication par satellite ou communication Internet.

11. Procédé de transmission d'information selon la revendication 1, comprenant en outre :
gérer les nœuds de transmission dans le réseau de transmission en utilisant une ou plusieurs des règles suivantes :
retirer un nœud de transmission qui ne répond pas aux exigences de service du réseau de transmission ;
sanctionner un nœud de transmission présentant un comportement anormal ;
permettre à un nœud ordinaire qui satisfait aux conditions de candidature d'être un nœud candidat dans le réseau de transmission ; et
permettre à un nœud candidat qui satisfait aux conditions d'élection d'être un nœud de transmission dans le réseau de transmission ;
dans lequel l'étape de retirer un nœud de transmission qui ne répond pas aux exigences de service du réseau de transmission comprend en outre :
lorsque l'un ou plusieurs des nœuds de transmission du réseau de transmission sont détectés comme ne parvenant pas à effectuer une action de transmission d'information comme requis dans un délai spécifié, retirer le ou les nœuds de transmission du réseau de transmission ;
l'étape de sanctionner un nœud de transmission présentant un comportement anormal comprend :
après avoir détecté la présence d'un nœud de transmission présentant un comportement anormal prédéterminé, qui est défini comme un nœud fautif, soumettre, par une partie d'audit du réseau de transmission, une résolution de sanction à l'encontre du nœud fautif sur la chaîne de blocs ; et exécuter automatiquement les mesures de sanction pertinentes par les nœuds de transmission selon la résolution de sanction ; et/ou
soumettre, par au moins l'un parmi l'expéditeur, le destinataire et les nœuds de transmission, une preuve contre le comportement anormal du nœud fautif sur la chaîne de blocs ; et exécuter, par les nœuds de transmission, une sanction contre le nœud fautif conformément à la preuve et à un protocole d'audit.

12. Procédé de transmission d'information selon la revendication 1, **caractérisé en ce que** l'étape de permettre à un nœud ordinaire qui satisfait aux conditions de candidature d'être un nœud candidat dans le réseau de transmission comprend en outre :
déployer un contrat de campagne de nœuds sur la chaîne de blocs ; et permettre à un nœud ordinaire qui met en gage un nombre prédéterminé de jetons dans le contrat de campagne de nœuds de devenir le nœud candidat dans le réseau de transmission.

13. Procédé de transmission d'information selon la revendication 1, **caractérisé en ce que** l'étape de permettre à un nœud candidat qui satisfait aux conditions d'élection d'être un nœud de transmission dans le réseau de transmission comprend en outre :
permettre au nœud candidat satisfaisant à une ou plusieurs des conditions suivantes de devenir le nœud de transmission du réseau de transmission :
(1) un taux de transmission/connexion avec un nœud de transmission associé satisfait à une première condition prédéterminée, dans lequel le nœud de transmission associé est un nœud de transmission dans le réseau de transmission qui a une relation de transmission avec un nœud à remplacer ;
(2) un débit de transmission simultanée par trajets multiples avec le nœud de transmission associé satisfait à une deuxième condition prédéterminée ;
(3) le nombre de jetons mis en gage dans le contrat de campagne de nœuds pendant la fenêtre temporelle d'ouverture satisfait à une troisième condition prédéterminée ;
(4) le nombre de votes obtenus auprès d'un conseil de gouvernance du réseau de transmission satisfait à une quatrième condition prédéterminée ; et
(5) un taux de versement d'un nombre prédéterminé de jetons au contrat de campagne de nœuds pendant la fenêtre temporelle d'ouverture satisfait à une cinquième condition prédéterminée.

14. Système de transmission d'information, configuré pour mettre en œuvre le procédé de transmission d'information selon l'une quelconque des revendications 1 à 13, comprenant :
un expéditeur ;
un destinataire ;
un réseau de transmission ; et
une chaîne de blocs ;
**caractérisé en ce que** l'expéditeur est configuré pour créer un contrat de transmission sur la chaîne de blocs, soumettre une empreinte de l'information à transmettre au contrat de transmission, et envoyer un texte chiffré de l'information à transmettre, une adresse du destinataire et une adresse du contrat de transmission à un premier nœud de transmission du réseau de transmission, dans lequel l'expéditeur est configuré pour être enregistré au premier nœud de transmission du réseau de transmission ;
le premier nœud de transmission est configuré pour envoyer le texte chiffré de l'information à transmettre, l'adresse du destinataire et l'adresse du contrat de transmission à un deuxième nœud de transmission du réseau de transmission de manière point à point, dans lequel le destinataire est configuré pour être enregistré au deuxième nœud de transmission du réseau de transmission ; et
le deuxième nœud de transmission est configuré pour recevoir le texte chiffré de l'information à transmettre et l'adresse du contrat de transmission, et envoyer le texte chiffré de l'information à transmettre et l'adresse du contrat de transmission au destinataire, et générer et soumettre un accusé de réception au contrat de transmission.

15. Dispositif de transmission d'information basé sur une chaîne de blocs, comprenant :
au moins un processeur ; et
une mémoire en communication avec au moins un processeur ;
**caractérisé en ce que** la mémoire est configurée pour stocker une instruction exécutable par au moins un processeur, et l'instruction est configurée pour être exécutée par au moins un processeur afin d'exécuter le procédé de transmission d'information selon l'une quelconque des revendications 1 à 13.
